# FASCICULE DE BREVET EUROPEEN

(11) **EP 0 706 922 B1**
(45) Date de publication et mention de la délivrance du brevet: **18.03.1998**
(21) Numéro de dépôt: 95401999.8
(22) Date de dépôt: 04.09.1995
(51) Int. Cl.: B60T 7/08

(54) **Commande d'un frein de stationnement et d'une boîte de vitesses de véhicule**
Steuerung einer Feststellbremse und eines Getriebes
Control of a parking brake and a gearbox

(30) Priorité: 20.09.1994 FR 9411200
(43) Date de publication de la demande: 17.04.1996
(73) Titulaire: AUTOMOBILES PEUGEOT, 75116 Paris (FR); AUTOMOBILES CITROEN, 92200 Neuilly-sur-Seine (FR)
(72) Inventeur: Tisserand, Jean-Luc, F-95220 Herblay (FR)
(74) Mandataire: Gendraud, Pierre

(56) Documents cités:
- EP-A- 0 209 431
- DE-A- 4 035 390

## Description

L'invention est relative à la commande manuelle d'une boîte de vitesses et d'un frein de stationnement pour véhicule automobile.

La commande de ces deux organes s'effectue habituellement au moyen de deux leviers de manoeuvre ; il en résulte, en tenant compte de leur débattement, un encombrement important près du siège du conducteur du véhicule.

Pour réduire cet encombrement, il est connu par le brevet FR-A-2587944 de commander au moyen d'un seul levier de manoeuvre un frein de stationnement et une boîte de vitesses. Ce levier pivote, pour l'actionnement du frein, sur un carter de couplage relié à la timonerie de la boîte de vitesses, et ce carter est déplacé au moyen du levier pour effectuer les changements de vitesses.

Cette dernière manoeuvre peut s'avérer malaisée à cause de l'inertie que présente le carter de couplage, relativement lourd afin d'être assez rigide pour transmettre les efforts impliqués par la commande du frein. Cette disposition s'avère par ailleurs relativement complexe et coûteuse à fabriquer.

L'invention vise à réaliser, pour actionner un frein de stationnement et une boîte de vitesses telle qu'un inverseur, une commande peu encombrante comportant un seul levier de manoeuvre et qui soit plus simple et plus aisée à manoeuvrer que la disposition connue susmentionnée.

A cet effet, la commande manuelle proposée comporte un levier de manoeuvre pivotant sur un axe porté par une plaque en étant immobilisable sur celle-ci en plusieurs positions de commutation d'un organe de commande électrique de la boîte de vitesses, et elle est caractérisée en ce que la plaque pivote sur un axe fixe parallèle au premier axe et comporte un moyen d'accrochage d'un organe d'actionnement du frein, un secteur denté coopérant avec un cliquet propre à immobiliser la plaque en positions de serrage et de desserrage du frein, et une butée limitant le pivotement du levier sur le premier axe dans le sens correspondant au serrage du frein.

Selon quelques caractéristiques intéressantes de l'invention:
- la butée immobilise le levier dans une position extrême de commutation correspondant au point mort de la boîte de vitesses.
- le cliquet est dégageable du secteur denté au moyen d'une commande manuelle de déverrouillage.

Un mode de réalisation d'une commande selon l'invention, pour actionner un inverseur de marche et un frein de stationnement de véhicule, est décrit ci-après avec référence aux dessins annexés parmi lesquels :
- la figure 1 est une vue en élévation de la commande, en coupe partielle suivant la ligne I-I de la figure 2,
- et la figure 2 est une vue partielle en coupe suivant la ligne II-II de la figure 1.

On voit sur les figures un levier de manoeuvre 1 pivotant sur un premier axe 2 porté par un palier 2c solidaire d'une plaque 3 qui pivote elle-même sur un second axe 4, parallèle au premier, porté par un support 5 fixé, de façon non représentée, au plancher d'un véhicule. Ce support comporte par exemple deux flasques parallèles au plan de symétrie du véhicule, entre lesquels la plaque 3 qui leur est parallèle peut basculer vers l'avant ou vers l'arrière (flèches S et D) avec le levier 1, les axes 2 et 4 étant disposés transversalement au véhicule.

La plaque comporte un moyen d'accrochage usuel 6 pour un câble 7 d'actionnement d'un frein de stationnement non représenté du véhicule, une gaine 8 du câble prenant appui sur une partie fixe 5a du véhicule.

La plaque comporte aussi un secteur denté 9 centré sur l'axe 4 et coopérant avec un cliquet 10 qui pivote sur un troisième axe 11 parallèle aux deux autres. Cet axe est porté par le support 5 et solidaire en rotation du cliquet 10 et d'un bras 12 relié par un second câble 13 à un élément d'une commande de déverrouillage non représentée, tel qu'une tirette agencée sur la planche de bord du véhicule. Une gaine 14 de ce câble prend appui sur une butée 15 solidaire du support 5.

Un ergot 16 saillant du bras 12 sert d'appui pour un ressort en épingle 17 de rappel du cliquet en position d'engrènement avec la denture du secteur 9. L'agencement de celui-ci est tel que le cliquet est proche des dents d'extrémité quand le frein serré (position 3f de la plaque 3) ou totalement desserré (plaque 3 dans sa position représentée en traits pleins).

Un autre ressort en épingle 18 entourant l'axe 4 prend appui sur le support 5 et sur la plaque 3 de façon à faire pivoter celle-ci avec le levier 1 dans le sens D du desserrage du frein, correspondant à l'enfoncement du câble 7 dans sa gaine 8.

Le levier 1 comporte, de façon connue, des moyens d'arrêt en plusieurs positions de pivotement sur l'axe 2. Ces moyens comprennent une tige 19 traversant longitudinalement le levier (l'axe 2 étant à cet effet constitué par exemple de deux demi-axes 2a, 2b) et munie d'extrémités pliées formant doigts transversaux dont l'un 20 coopère avec une rampe 21 d'un bouton de commande 22 à rappel élastique par ressort 23, et l'autre 24 est engagé dans une lumière crantée 25 de la plaque 3 et est poussé dans le sens E de son engagement dans des crans par un ressort 26 logé dans le levier.

La lumière 25 forme un arc de cercle centré sur l'axe 2 et comporte trois crans a,b,c permettant d'immobiliser le levier dans trois positions 1a,1b,1c, auxquelles correspondent les commutations d'un organe de commande électrique non représenté provoquant respectivement les états de marche arrière, de marche avant et de point mort d'un inverseur du véhicule. A cet effet un plot de contact 27 est fixé à la tige 19 par l'intermédiaire d'une lame élastique 28.

Le palier 2c solidaire de la plaque 3 comporte une butée 29 limitant le pivotement du levier autour de l'axe 2 dans le sens S de serrage du frein, le levier étant alors dans sa position 1c correspondant au point mort.

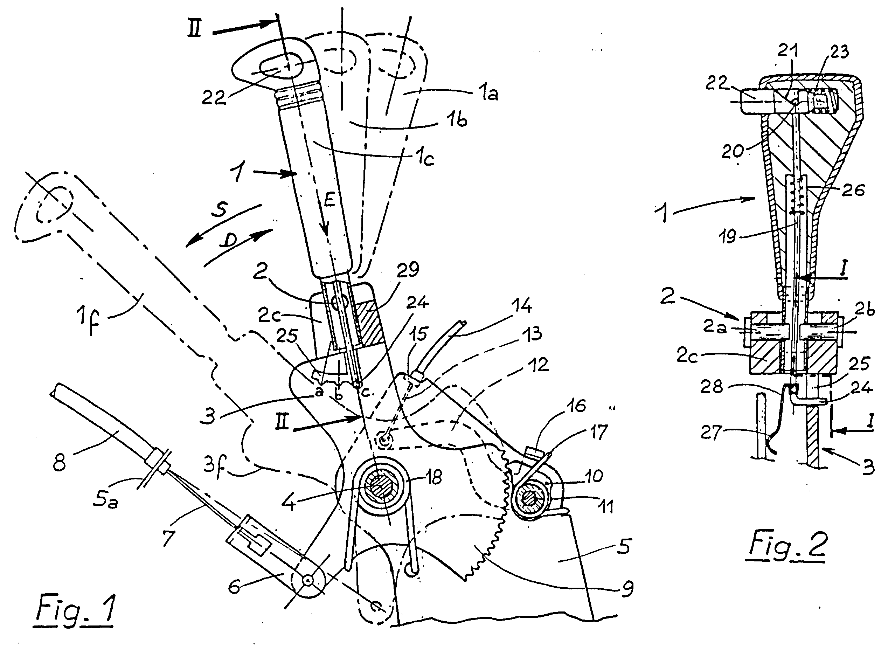

La plaque 3 se trouvant en position de desserrage du frein comme représenté en traits pleins à la figure 1, immobilisée dans le sens D par le cliquet 10 et dans le S par le ressort 18 relativement fort, une manoeuvre usuelle du levier 1, avec déverrouillage en enfonçant le bouton 22, permet de commander l'inverseur en sélectionnant alternativement l'une des trois positions 1a,1b,1c. Cette manoeuvre est aisée puisque seul le levier 1 pivote, la plaque 3 restant immobile.

Dans la position 1c du levier correspondant au point mort, une manoeuvre pour le serrage du frein par traction du câble 7 est assurée en faisant pivoter dans le sens S l'ensemble du levier 1 et de la plaque 3, solidarisés en rotation dans ce sens grâce à la butée 29, jusqu'à leur position 1f,3f où ils sont maintenus par engrènement du cliquet 10 dans la denture du secteur 9.

Le desserrage du frein s'obtient ensuite par traction du câble 13 au moyen de l'élément de commande de déverrouillage, ce qui dégage le cliquet de la denture, d'où résulte le pivotement dans le sens D, sous l'action du ressort 18, de l'ensemble du levier 1 et de la plaque 3 jusqu'à leur position initiale représentée en traits pleins.

Un dispositif analogue à celui qui vient d'être décrit peut actionner une boîte de vitesses automatique plutôt qu'un inverseur, à condition de remplacer la lumière 25 à crans a,b,c, et l'organe de commande électrique associé au levier 1 par d'autres éléments équivalents appropriés connus.

## Revendications

1. Commande d'un frein de stationnement et d'une boîte de vitesses de véhicule, comportant un levier de manoeuvre pivotant sur un axe porté par une plaque en étant immobilisable sur celle-ci en plusieurs positions de commutation d'un organe de commande électrique de la boîte de vitesses,
caractérisée en ce que la plaque (3) pivote sur un axe fixe (4) parallèle au premier axe (2) et comporte un moyen (6) d'accrochage d'un organe (7) d'actionnement du frein, un secteur denté (9) coopérant avec un cliquet (10) propre à immobiliser la plaque en positions (3f,3) de serrage et de desserrage du frein, et une butée (29) limitant le pivotement du levier (1) sur le premier axe (2) dans le sens (S) correspondant au serrage du frein.

2. Commande selon la revendication 1,
caractérisée en ce que la butée (29) immobilise le levier (1) dans une position extrême (1c) de commutation correspondant au point mort de la boîte de vitesses.

3. Commande selon la revendication 1 ou 2,
caractérisée en ce que le cliquet (10) est dégageable du secteur denté (9) au moyen d'une commande manuelle de déverrouillage (12,13).

4. Commande selon l'une quelconque des revendications précédentes,
caractérisée en ce que la boîte de vitesses est un inverseur et le levier (1) est immobilisable, dans son pivotement autour du premier axe (2), en trois positions correspondant respectivement aux marches avant et arrière et au point mort, par engagement d'un doigt (24) porté par le levier (1) dans trois crans (a,b,c) d'une lumière (25) de la plaque (3).

5. Commande selon l'une quelconque des revendications précédentes,
caractérisée en ce qu'un ressort de rappel (18) exerce sur la plaque (3) un effort suffisant, dans le sens (D) inverse de celui correspondant au serrage du frein, pour la ramener avec le levier (1) en position de desserrage du frein quand le cliquet (10) est dégagé de la denture du secteur (9).

## Claims

1. Control for a parking brake and a gear box of a vehicle, comprising a lever handle pivoting on an axis carried by a plate and being capable of being immobilised thereon in several positions for switching an electrical control member of the gear box,
characterised in that the plate (3) pivots on a fixed axis (4) parallel to the first axis (2) and comprises a means (6) for hooking a member (7) for actuating the brake, a toothed sector (9) co-operating with a pawl (10) capable of immobilising the plate in positions (3f, 3) for tightening and releasing the brake, and a stop (29) limiting the pivoting of the lever (1) on the first axis (2) in the direction (S) corresponding to the tightening of the brake.

2. Control according to Claim 1,
characterised in that the stop (29) immobilises the lever (1) in an extreme switching position (1c) corresponding to neutral in the gear box.

3. Control according to Claim 1 or 2,
characterised in that the pawl (10) can be disengaged from the toothed sector (9) by means of a manual unlocking control (12, 13).

4. Control according to any one of the preceding claims,
characterised in that the gear box is an inverter and the lever (1) can be immobilised, in its pivoting about the first axis (2), in three positions corresponding respectively to forward and reverse and neutral, by engaging a pin (24) carried by the lever (1) in three notches (a, b, c) of a slot (25) in the plate (3).

5. Control according to any one of the preceding claims,
characterised in that a return spring (18) exerts on the plate (3) a sufficient effort, in the reverse direction (D) to that corresponding to the tightening of the brake, to bring it back together with the lever (1) into the brake release position when the pawl (10) is disengaged from the toothing of the sector (9).

## Patentansprüche

1. Steuerung einer Feststellbremse und eines Schaltgetriebes eines Fahrzeugs, mit einem Betätigungshebel, der um eine Achse schwenkt, die von einer Platte getragen wird, und auf dieser in mehreren Umschaltpositionen eines elektrischen Steuerorgans des Schaltgetriebes feststellbar ist, dadurch gekennzeichnet, daß die Platte (3) um eine feste Achse (4) parallel zur ersten Achse (2) schwenkt und ein Mittel (6) zur Befestigung eines Betätigungsorgans (7) der Bremse, einen gezahnten Sektor (9), der mit einer Klinke (10) zusammenwirkt, die die Platte in Anzieh- und Lösungspositionen (3f, 3) der Bremse festsetzen kann, und einen Anschlag (29) aufweist, der das Schwenken des Hebels (1) um die erste Achse (2) in der dem Anziehen der Bremse entsprechender Richtung (S) begrenzt.

2. Steuerung nach Anspruch 1, dadurch gekennzeichnet, daß der Anschlag (29) den Hebel (1) in einer Umschaltungs-Endstellung (1c) feststellt, die dem Leerlauf des Schaltgetriebes entspricht.

3. Steuerung nach Anspruch 1 oder 2, dadurch gekennzeichnet, daß die Klinke (10) mittels einer manuellen Entriegelungs-Steuerung (12, 13) aus dem gezahnten Sektor (9) gelöst werden kann.

4. Steuerung nach einem beliebigen der vorhergehenden Ansprüche, dadurch gekennzeichnet, daß das Schaltgetriebe ein Wendegetriebe ist und daß der Hebel (1) bei seinem Schwenken um die erste Achse (2) in drei Positionen festgestellt werden kann, die je dem Vorwärtsgang, dem Rückwärtsgang bzw. dem Leerlauf entsprechen, durch Einführen eines vom Hebel (1) getragenen Fingers (24) in drei Rastkerben (a, b, c) einer Öffnung (25) der Platte (3).

5. Steuerung nach einem beliebigen der vorhergehenden Ansprüche, dadurch gekennzeichnet, daß eine Rückholfeder (18) auf die Platte (3) in Richtung (D) entgegengesetzt zur Richtung des Anziehens der Bremse eine ausreichende Kraft ausübt, um sie mit dem Hebel (1) in die Position des Lösens der Bremse zurückzuholen, wenn die Klinke (10) aus der Zahnung des Sektors (9) gelöst ist.
